# EUROPÄISCHE PATENTSCHRIFT

(11) **EP 0 682 558 B1**
(45) Veröffentlichungstag und Bekanntmachung des Hinweises auf die Patenterteilung: **11.06.1997**
(21) Anmeldenummer: 94906902.5
(22) Anmeldetag: 04.02.1994
(51) Int. Cl.: B01D 53/34, B01J 20/20

(54) **MITTEL ZUR TROCKENEN REINIGUNG VON ABGASEN**
EXHAUST GAS DRY CLEANING AGENT
AGENT D'EPURATION A SEC DE GAZ DE COMBUSTION

(30) Priorität: 05.02.1993 DE 4303450
(43) Veröffentlichungstag der Anmeldung: 22.11.1995
(73) Patentinhaber: Rheinische Kalksteinwerke GmbH, 42489 Wülfrath (DE)
(72) Erfinder: KIENOW, Ekkehard, D-42553 Velbert (DE); MORUN, Bernd, D-45259 Essen (DE); SCHWERTMANN, Thomas, D-42781 Haan (DE); HOBERG, Heinz, D-52062 Aachen (DE)
(86) Internationale Anmeldenummer: EP9400320
(87) Internationale Veröffentlichungsnummer: WO9417900

(56) Entgegenhaltungen:
- WO-A-89/11329
- DE-A- 3 939 214
- DE-A- 4 042 136

## Beschreibung

Die Erfindung betrifft ein staubförmiges Mittel zur Reinigung von Abgasen, zum Beispiel Rauchgasen, nach dem Prinzip der Trockenadsorption, das aus einem Gemisch von Aktivkoksen mit Inertmaterialien besteht, die keine Staubexplosionsfähigkeit besitzen.

Bekannt ist, Aktivkokse, wie zum Beispiel Aktivkohlen auf Steinkohlenbasis oder Torfbasis oder Herdofenkokse auf Braunkohlenbasis, zum Teil unter Zumischung von Inertmaterialien, für die Abgasreinigung einzusetzen, um saure Schadstoffe (zum Beispiel Schwefelsäure, Salzsäure, Fluorwasserstoffsäure), organische Stoffe wie chlorierte Kohlenwasserstoffe (zum Beispiel Dioxine und Furane) sowie Schwermetalle und Schwermetallverbindungen abzuscheiden. In Anlagen nach dem Flugstromadsorptionsprinzip werden solche Mittel möglichst gleichmäßig im Rauchgasstrom verteilt, reagieren im Flug mit Schadgasen und Schadstoffen und werden mit anderen staubförmigen Bestandteilen des Rauchgases an Filtern abgeschieden. Das gereinigte Rauchgas gelangt über einen Kamin ins Freie.

Zur Abscheidung von sauren Schadgasen, wie zum Beispiel HCl, SO₂, SO₃, HF im Flugstromverfahren ist bekannt, reaktive Kalziumverbindungen wie zum Beispiel feinteiliges Kalkhydrat (Kalziumhydroxid, Ca(OH)₂) einzusetzen. Zum Einblasen in den Abgasstrom geeignete Kalkhydrate können nach verschiedenen bekannten Verfahren hergestellt sein, wie zum Beispiel nach Patent DE 34 33 228.

Zur Abscheidung von Schwermetallen, Schwermetallverbindungen und organischen Verbindungen wie Dioxine und Furane, die zum Beispiel in den Rauchgasen von Müllverbrennungsanlagen enthalten sind, ist bekannt, Aktivkokse wie zum Beispiel Aktivkohlen und Braunkohlen-Herdofenkokse einzusetzen.

Dabei hat sich als nachteilig erwiesen, daß auch bei Einhaltung der Regeln der Technik im Umgang mit brennbaren Adsorbenzien der Einsatz von Aktivkoksen mit der Gefahr von Staubexplosionen verbunden sein kann. Bei Mischungen von Inertmaterialien mit Aktivkoksen gelten zumindest Mischungen mit einem Massenanteil an Kohlenstoff von kleiner oder gleich 30 % als nicht explosionsfähig. Es sind dann aber zusätzliche sicherheitstechnische Forderungen für den Einsatz dieser aus Aktivkoksen und Inertmaterialien bestehenden pulverförmigen Mittel zu erfüllen. Auf Maßnahmen für vorbeugenden Explosionsschutz, die den investiven Aufwand für das Flugstromverfahren deutlich erhöhen würden, kann nur verzichtet werden, wenn die Mischungen inhärent sicher sind. Unter keinem Betriebszustand dürfen Konzentrationsverschiebungen in der Weise auftreten, daß sich Strähnen oder auch Staubablagerungen mit gefährlichen Kohlenstoffgehalten bilden können.

Aus der WO-A-8911329 sind Mittel zur Gas- und Abgasreinigung auf Basis von reaktionsfähigem Kalziumhydroxid bekannt, die als zweite Komponente oberflächenaktive Substanzen, wie zum Beispiel Aktivkohle oder Braunkohlenherdofenkoks enthalten. Die oberflächenaktiven Substanzen haben eine Korngröße, bestimmt als Siebdurchgang, von < 200 µm. Bevorzugt wird eine Korngröße, die derjenigen von Kalziumhydroxidpulver entspricht.

Bei Zweikomponentenmischungen auf der Basis von reaktiven Kalziumverbindungen und staubförmigen Aktivkoksen ist nämlich im allgemeinen der Körnungsaufbau der Einzelkomponenten so unterschiedlich, daß man mit störenden Konzentrationsverschiebungen rechnen muß. Bei Aktivkoksen kann das den Körnungsaufbau charakterisierende Maximalkorn je nach verwendeter Sorte etwa bis zu 200 µm bis 500 µm betragen und bei Kalkhydrat als reaktive Kalziumverbindung bis ca. 30 µm.

Werden solche Mischungen von unterschiedlichem Kornaufbau, zum Beispiel Kalkhydrat-/Aktivkoksmischungen im Flugstromverfahren in Rauchgasreinigungsanlagen eingesetzt, dann kann es an Stellen, an denen zum Beispiel Zentrifugalkräfte wirksam werden, wie zum Beispiel in Krümmern, zu örtlichen Konzentrationsverschiebungen im Strömungsfeld kommen. In der Grobfraktion reichern sich dann die größeren Partikel an, das heißt es finden sich dort höhere Kohlenstoffkonzentrationen.

Es kann nicht ausgeschlossen werden, daß aus dem Strömungsfeld kleinere Mengen der Grobfraktion mit angereichertem Kohlenstoffanteil sich ablagern und zwar an Stellen, die nicht oder nicht stark genug durchströmt werden. Laborversuche mit Kalkhydrat-Aktivkoks-Mischungen in Laborwindsichtern haben gezeigt, daß auch bei Ausgangsmischungen mit Kohlenstoffgehalten unter 30 % unter ungünstigen Umständen sicherheitstechnisch bedenkliche Kohlenstoffanreicherungen gefunden werden.

Dieses Problem kann auch nicht durch das übliche Aufmahlen des Aktivkokses gelöst werden, mit dem das Grobkorn so begrenzt wird, daß auch die gröbsten Partikel bei den Bedingungen von Flugstromverfahren (Gasgeschwindigkeiten bis hinunter zu 6 m/s) noch flugfähig sind.

Versuche, die Korngrößenverteilung der staubförmigen Aktivkokse dem Kalkhydrat anzupassen, so daß beide Komponenten die gleiche Sink- oder Driftgeschwindigkeitsverteilung haben, haben gezeigt, daß zwar bei genügend feiner Aufmahlung sich keine Konzentrationsverschiebung mehr einstellt. Das würde aber voraussetzen, daß die Aktivkohlen in etwa auf die Korngröße des Kalkhydrates, das heißt auf < 50 µm heruntergemahlen werden müßten. Dies ist technisch außerordentlich aufwendig und wirtschaftlich nicht vertretbar.

Würde man versuchen, feinteiliges Kalkhydrat so weit zu agglomerieren, daß dessen Sink- bzw. Driftgeschwindigkeitsverteilung der Sink- bzw. Driftgeschwindigkeitsverteilung der Aktivkokse angepaßt ist, wäre die Wirksamkeit für die Abscheidung von sauren Schadgasen deutlich vermindert, so daß eine solche Lösung nicht sinnvoll erscheint.

Der Erfindung liegt daher die Aufgabe zugrunde, ein staubförmiges, Aktivkokse enthaltendes Gemisch bereitzustellen, bei dem der Massenanteil an Kohlenstoff bis zu 30 % beträgt und das bei Einsatz im Flugstromverfahren bei allen Betriebszuständen in allen Fraktionen keiner derartigen Konzentrationsverschiebung unterliegt, daß sich bei Volumenanteilen von Sauerstoff bis 21 % staubexplosionsfähige Fraktionen bilden können.

Diese Aufgabe wird erfindungsgemäß dadurch gelöst, daß in dem Gemisch mindestens eine Inertstoffkomponente hinsichtlich ihrer Korngrößenverteilung an die Korngrößenverteilung der Aktivkokskomponente so angepaßt ist, daß in einem ruhenden Gasmedium die Sinkgeschwindigkeit des Oberkorns der Inertstoffkomponente gleich oder größer der Sinkgeschwindigkeit des Oberkorns der Aktivkokskomponente ist.

Unter Oberkorn ist die Partikelgröße d₉₇ zu verstehen, der der Durchgangssummenwert 97 % der Partikelgrößenverteilung zugeordnet ist (97 % aller Partikel sind kleiner als d₉₇).

Mit praktisch hinlänglicher Genauigkeit werden gleiche Sinkgeschwindigkeiten im Gasmedium erreicht, wenn die d₉₇-Werte der Partikelgrößenverteilungen von Aktivkoks und Inertstoff im umgekehrten Verhältnis der Wurzeln aus den Partikeldichten von Aktivkoks und Inertkomponente stehen (Partikeldichten nach DIN 66160).

Bevorzugt wird ein Gemisch, bei dem die Steigung der Körnungslinie mindestens einer korngrößenangepaßten Inertstoffkomponente gleich oder größer der Steigung der Körnungslinie der Aktivkokskomponente ist. (Zur Beschreibung von Kornverteilungungen durch RRSB-Geraden vgl. DIN 66145.)

Als Inertmaterial kann Kalksteinmehl eingesetzt werden.

Als weitere nicht korngrößenangepaßte Inertmaterialien können reaktive Kalziumverbindungen eingesetzt werden. Besonders bevorzugt ist Kalkhydrat.

Das erfindungsgemäße Mittel kann in allen Rauchgasreinigungsanlagen mit separat betriebenen oder vor- oder nachgeschalteten Adsorptionsstufen nach dem Flugstromprinzip eingesetzt werden.

Wenn man, um eine gut angepaßte Sinkgeschwindigkeitsverteilung zu erreichen, mehrere Inertkomponenten einsetzt, ergibt sich als besonderer Vorteil, daß man mit möglichst wenig zusätzlichem Inertmaterial sichere kohlenstoffhaltige Mischungen für das Flugstromverfahren herstellen kann. Ebenso ist es möglich, als Inertmaterial ein oder mehrere Rauchgasreinigungsreagenzien einzusetzen, wenn diese in bezug auf die Explosionsfähigkeit staubförmiger Aktivkokse als Inertmaterial wirken und in der gewünschten Korngrößenverteilung vorliegen. Ein bevorzugt eingesetztes Inertmaterial ist Kalksteinmehl, das preisgünstig und in vielen Mahlfeinheiten verfügbar ist. Kalksteinmehl ist umweltverträglich und in keiner Weise toxisch.

Weitere Vorteile bei den erfindungsgemäß hergestellten Mischungen gegenüber den bisher eingesetzten Mischungen bestehen darin, daß bei Mischungen von Aktivkoks mit basischen Abgasreinigungs-Reagenzien als Inertstoff inhärent sichere Mischungen mit dem geringstmöglichen Inertstoffanteil, der auf die Korngrößenverteilung der Aktivkokse und den Kohlenstoffanteil abgestimmt ist, herstellbar sind. Bei Mischungen von Aktivkoksen mit einem Inertstoff, der nicht oder nur in geringem Ausmaß mit dem Abgas reagiert, kann man sichere Mischungen mit Kohlenstoffgehalten bis 30 % herstellen. Die Begrenzung der Inertanteile im Reagenz minimiert die Einsatzmenge im Flugstromverfahren und bietet somit Kostenvorteile.

Bei Verfahren nach dem Prinzip der Naßwäsche enthält das vorgereinigte Abgas keine oder nur geringe Konzentrationen an sauren Schadststoffkomponenten. Es sind aber organische Verbindungen und Schwermetalle enthalten.

In einer vor- oder nachgeschalteten Sorptionsstufe kann ein erfindungsgemäßes Abgasreinigungsmittel folgende Zusammensetzung aufweisen (Massenanteile in %):
- 25 %: Aktivkoksstaub
- 70 %: der Aktivkokskörnung angepaßtes Inertmaterial (zum Beispiel Kalksteinmehl)
- 5 %: hochreaktives Kalkhydrat

Damit wird erreicht, daß als Hauptbestandteil ein in der Sinkgeschwindigkeit dem groben Aktivkoksstaub angepaßter kostengünstiger Inertstoff eingesetzt werden kann, der verhindert, daß - falls es unter extremen Umständen zu Ablagerungen im Rauchgasreinigungssystem kommt - unzulässige und gefährliche Kohlenstoffkonzentrationen in diesen Ablagerungen auftreten können. Die hochreaktive Kalkhydratkomponente in dieser Mischung ermöglicht bei Bedarf eine Restabscheidung saurer Abgaskomponenten.

Dieses Mischungsbeispiel stellt für Naßwäschen eine sicherheitstechnisch optimale und kostengünstige Lösung in bezug auf die relevanten Abgasschadstoffkomponenten dar.

Bei Verfahren nach dem Prinzip der Sprühsorption enthält das vorgereinigte Abgas je nach Betriebsart nicht unerhebliche Konzentrationen an sauren Schadstoffkomponenten sowie organische Verbindungen und Schwermetalle.

Hier kann in einer nachgeschalteten Rauchgasreinigung das erfindungsgemäße Abgasreinigungsmittel folgende Zusammensetzung aufweisen (Massenanteile in %):
- 10 %: Aktivkoksstaub
- 10 %: der Aktivkokskörnung angepaßtes Inertmaterial (zum Beispiel Kalksteinmehl)
- 80 %: hochreaktives Kalkhydrat

Damit wird erreicht, daß trotz hoher Reaktivität des Additives gegenüber sauren Schadstoffkomponenten auch in Extremfällen in möglicherweise auftretenden Ablagerungen keine Konzentrationsverschiebungen auftreten, die zu gefährlichen Kohlenstoffgehalten führen.

Die Mischung kann in Sprühsorptionsanlagen auch als Kalkmilchsuspension einstufig eingesetzt werden.

Dieses Mischungsbeispiel stellt für Sprühsorptionen nachgeschalteter Rauchgasreinigungsanlagen eine sicherheitstechnisch optimale und kostengünstige Lösung in bezug auf die relevanten Abgasschadstoffkomponenten dar.

Bei Verfahren nach dem Prinzip der Trockensorption enthält das vorgereinigte Abgas je nach Betriebsweise nicht unerhebliche Konzentrationen an sauren Schadstoffkomponenten sowie organische Verbindungen und Schwermetalle.

Hier kann das erfindungsgemäße Abgasreinigungsmittel folgende Zusammensetzung aufweisen (Massenanteile in %):
- 5 %: Aktivkoksstaub
- 3 %: der Aktivkokskörnung angepaßtes Inertmaterial (zum Beispiel Kalksteinmehl)
- 92 %: hochreaktives Kalkhydrat

Damit ist eine Adsorption von sauren Schadstoffkomponenten mit hohem Wirkungsgrad gewährleistet und gleichzeitig sichergestellt, daß es im Falle ungünstiger Bedingungen in der Rauchgasreinigungsanlage nicht zu Ablagerungen grobteiliger Partikel mit unzulässigen Kohlenstoffkonzentrationen kommen kann.

Die vorstehend genannten Beispiele für verschiedene Zusammensetzungen erfindungsgemäßer Gemische zeigen, daß es möglich ist, die Problemstellungen der unzulässigen Konzentrationsverschiebungen an Kohlenstoff in abgelagertem Material sowohl in separat betriebenen wie auch in vor- oder nachgeschalteten Adsorptionsstufen für relevante Schadstoffkomponenten zu lösen.

Die Erfindung wird durch die folgenden, in einer Tabelle aufgeführten Beispiele erläutert.

Im Beispiel 1 wird bei der Mischung gemäß Stand der Technik der Aktivkoks auf 0 % Rückstand 75 µm (entspricht in etwa 3 % Rückstand auf 43 µm) aufgemahlen und mit Normalhydrat gemischt.

Die Beispiele 2 bis 21 sind Mischungen nach der Erfindung. Die Mischungen 2 bis 20 sind auf der Basis von Sinkgeschwindigkeitsklassen so ausgeführt, daß sich in keiner Sinkgeschwindigkeitsklasse ein Aktivkoksgehalt von größer 30 % einstellt. Bei Beispiel 21 wurde ein maximal zulässiger Massenanteil an Aktivkoksen von 40 % als nicht gefährlich angenommen. Bei den 3-Komponentenmischungen liegt in der Praxis der für das Einhalten des maximalen Kohlenstoffgehaltes benötigte Anteil an Inertstoff 1 niedriger als der ausgewiesene Wert, da grobe Koks- und Inertstoffpartikel feines Kalkhydrat mitschleppen können und so der wahre Kohlenstoffanteil niedriger als 30 % bzw. 40 % liegen wird. Somit werden in der Tabelle bei 3-Komponentenmischungen die Inertstoffanteile 1 als Maximalwerte ausgewiesen.

Die Beispiele 2 bis 5 sind Zweistoffmischungen auf der Basis Aktivkoks mit unterschiedlichen Inertstoffen. Bei den Inertstoffen von Mischungen 2 bis 4 ist das Grobkorn dem des Aktivkokses angepaßt. Bei Mischung 2 ist der Inertstoff auch im Hinblick auf die Steigung der Aktivkokskomponente angepaßt, bei Mischung 3 ist die Kornverteilung des Inertstoffes steiler als die Kornverteilung der Aktivkokskomponente, bei Mischung 4 ist die Kornverteilung des Inertstoffes flacher als die Kornverteilung der Aktivkokskomponente und bei Mischung 5 ist das Grobkorn des Inertstoffes gröber als bei den angepaßten Steinmehlen und die Steigung der Kornverteilung ist mit 0,98 um ca. 0,25 steiler als die Steigung der Aktivkokskomponente. Es ist klar zu erkennen, daß man am wenigsten Inertstoff braucht, wenn man bei 2-Komponentenmischungen aus Aktivkoks und Inertstoff 1, hier Kalksteinmehl, Inertstoff einsetzt, der hinsichtlich Grobkorn (ca. 50 % des Wertes des Kokses) und Steilheit (n_{Inertstoff 1} = n_{Aktivkoks}) angepaßt ist.

Beispiele 2, 5, 6 und 7 zeigen, daß beim Übergang von 2-Komponentenmischung (Aktivkoks und (grober) Inertstoff 1) zur 3-Komponentenmischung (Aktivkoks, (grober) Inertstoff 1 und (feiner) Inertstoff 2) sich beim ideal an den Aktivkoks angepaßten Inertstoff 1 die Anteile Inertstoff 1 nicht verringern lassen. Bei 3-Komponentenmischungen kann man den Anteil an Inertstoff 1 dann verringern, wenn man einen Inertstoff einsetzt, der etwas gröber und in der Kornverteilung steiler als der dem Aktivkoks angepaßte Inertstoff 2 ist (Beispiele 5, 8 bis 11, 12 bis 14, 15 bis 17).

Beispiele 18 bis 20 zeigen, daß man auch bei niedrigen Aktivkoksgehalten durch den Einsatz von Inertstoff 2 den Anteil an Inertstoff 1 senken kann (von 57 Teile auf 26 bzw. 16 Teile).

Beispiel 21 zeigt, daß bei Zulassen einer Konzentrationsverschiebung bis zu einem Aktivkoksgehalt bis zu 40 %, sich der (unerwünschte) Gehalt an Inertstoff 1 von 16 auf 11 Teile senken läßt.

**Tabelle**

| Zusammensetzungen verschiedener Mischungen von Aktivkoksen mit Inertmaterialien | | | |
|---|---|---|---|
| Beispiel Nr. | Aktivkoks | Inertstoff 1 | Inertstoff 2 |
| 1 | Aktivkoks A 30 Teile | | Kalkhydrat A 70 Teile |
| 2 | Aktivkoks D 30 Teile | Inertstoff A 70 Teile | |
| 3 | Aktivkoks D 30 Teile | Inertstoff B 189 Teile | |
| 4 | Aktivkoks D 30 Teile | Inertstoff C 93 Teile | |
| 5 | Aktivkoks D 30 Teile | Inertstoff D 170 Teile | |
| 6 | Aktivkoks D 30 Teile | Inertstoff A max. 70 Teile | Kalkhydrat A 70 Teile |
| 7 | Aktivkoks D 30 Teile | Inertstoff A max. 70 Teile | Kalkhydrat B 70 Teile |
| 8 | Aktivkoks D 30 Teile | Inertstoff D max. 63 Teile | Kalkhydrat A 70 Teile |
| 9 | Aktivkoks D 30 Teile | Inertstoff D max. 59 Teile | Kalkhydrat B 70 Teile |
| 10 | Aktivkoks D 30 Teile | Inertstoff D max. 77 Teile | Kalkhydrat A 10 Teile |
| 11 | Aktivkoks D 30 Teile | Inertstoff D max. 102 Teile | Kalkhydrat B 10 Teile |
| 12 | Aktivkoks B 30 Teile | Inertstoff D 95 Teile | |
| 13 | Aktivkoks B 30 Teile | Inertstoff D max. 80 Teile | Kalkhydrat A 70 Teile |
| 14 | Aktivkoks B 30 Teile | Inertstoff D max. 74 Teile | Kalkhydrat B 70 Teile |
| 15 | Aktivkoks C 30 Teile | Inertstoff E 91 Teile | |
| 16 | Aktivkoks C 30 Teile | Inertstoff E max. 72 Teile | Kalkhydrat A 70 Teile |
| 17 | Aktivkoks C 30 Teile | Inertstoff E max. 73 Teile | Kalkhydrat B 70 Teile |
| 18 | Aktivkoks D 10 Teile | Inertstoff D 57 Teile | |
| 19 | Aktivkoks D 10 Teile | Inertstoff D max. 26 Teile | Kalkhydrat B 10 Teile |
| 20 | Aktivkoks D 10 Teile | Inertstoff D max. 16 Teile | Kalkhydrat B 90 Teile |
| 21 | Aktivkoks D 10 Teile | Inertstoff D max. 11 Teile | Kalkhydrat B 90 Teile |

Die Bedeutung der verwendeten Bezeichnungen wird im folgenden erläutert:
Inertstoffe 1 sind Inertstoffe mit höherer Korndichte als die Aktivkokse und mit einem D₉₇-Wert im Bereich von größer/gleich 50 % in bezug auf den eingesetzten Aktivkoks.
Inertstoffe 2 sind im Vergleich zu Inertstoffen 1 feinteilige Kalkhydrate, die beim Flugstromverfahren als Reagenz zur Abscheidung von sauren Schadgasen eingesetzt werden.

- Aktivkoks A:: Herdofenkoks 0 % Rückstand auf 75 µm
RRSB: nicht angegeben
Korndichte ρ_{K} = 0,95 g/cm³
- Aktivkoks B:: Herdofenkoks 3 % Rückstand auf 110 µm
RRSB: d' = 36 µm, n = 1,08
Korndichte ρ_{K} = 0,95 g/cm³
- Aktivkoks C:: Herdofenkoks 3 % Rückstand auf 200 µm
RRSB: d' = 52 µm, n = 0,94
Korndichte ρ_{K} = 0,95 g/cm³
- Aktivkoks D:: Aktivkoks auf Torfbasis 3 % Rückstand auf 158 µm
RRSB: d' = 28 µm, n = 0,73
Korndichte ρ_{K} ca. 0,8 g/cm³
- Inertstoff A:: Kalksteinmehl 3 % Rückstand auf 85,5 µm
RRSB: d' = 15,3 µm, n = 0,73
Korndichte ρ_{K} = 2,66 g/cm³
- Inertstoff B:: Kalksteinmehl 3 % Rückstand auf 85,5 µm
RRSB: d' = 30 µm, n = 1,2
Korndichte ρ_{K} = 2,66 g/cm³
- Inertstoff C:: Kalksteinmehl 3 % Rückstand auf 85,5 µm
RRSB: d' = 11 µm, n = 0,6
Korndichte ρ_{K} = 2,66 g/cm³
- Inertstoff D:: Kalksteinmehl 3 % Rückstand auf 105 µm
RRSB: d' = 30 µm, n = 0,97
Korndichte ρ_{K} = 2,66 g/cm³
- Inertstoff E:: Kalksteinmehl 3 % Rückstand auf 145 µm
RRSB: d' = 39 µm, n = 0,96
Korndichte ρ_{K} = 2,66 g/cm³
- Kalkhydrat A:: Kalkhydrat 3 % Rückstand auf 47 µm
50 % Rückstand auf 5,2 µm
Korndichte ρ_{K} ca. 0,8 g/cm³
- Kalkhydrat B:: Kalkhydrat 3 % Rückstand auf 22 µm
50 % Rückstand auf 3,4 µm
Korndichte ρ_{K} ca. 0,6 g/cm³

Bei den beiden letzten Bezeichnungen ist zu beachten, daß bei Kalkhydraten eine Charakterisierung durch RRSB-Feinheitsparameter nicht sinnvoll ist, da die Korngrößenverteilungen dieser Stoffe sich im RRSB-Netz nicht durch Geraden beschreiben lassen.

## Patentansprüche

1. Staubförmiges Mittel zur Reinigung von Abgasen nach dem Prinzip der Trockenadsorption, das aus einem Gemisch von Aktivkoksen mit Inertmaterialien besteht, die keine Staubexplosionsfähigkeit besitzen, dadurch gekennzeichnet, daß in dem Gemisch mindestens eine Inertstoffkomponente hinsichtlich ihrer Korngrößenverteilung an die Korngrößenverteilung der Aktivkokskomponente so angepaßt ist, daß in einem ruhenden Gasmedium die Sinkgeschwindigkeit des Oberkorns der Inertstoffkomponente gleich oder größer der Sinkgeschwindigkeit des Oberkorns der Aktivkokskomponente ist, und daß der Massenanteil an Kohlenstoff im staubförmigen Gemisch bis zu 30 % betragen kann.

2. Mittel nach Anspruch 1, dadurch gekennzeichnet, daß die Steigung der Körnungslinie mindestens einer korngrößenangepaßten Inertstoffkomponente gleich oder größer der Steigung der Körnungslinie der Aktivkokskomponente ist.

3. Mittel nach Anspruch 1 oder 2, dadurch gekennzeichnet, daß die korngrößenangepaßte Inertstoffkomponente Kalksteinmehl ist.

4. Mittel nach einem der Ansprüche 1 bis 3, dadurch gekennzeichnet, daß eine weitere nicht korngrößenangepaßte Inertstoffkomponente reaktive Kalziumverbindungen enthält.

5. Mittel nach Anspruch 4, dadurch gekennzeichnet, daß die reaktive Kalziumverbindung Kalziumhydroxid ist.

6. Verwendung des Mittels nach einem der vorhergehenden Ansprüche in Rauchgasreinigungsanlagen mit separat betriebenen oder vor- oder nachgeschalteten Adsorptionsstufen nach dem Flugstromprinzip.

7. Verwendung des Mittels nach einein der Ansprüche 1 bis 5, dadurch gekennzeichnet, daß es in Sprühsorptionsanlagen als Kalkmilchsuspension eingesetzt wird.

## Claims

1. A dust-like medium for the purification of waste gases based on the principle of dry adsorption, which consists of a mixture of activated cokes and inert materials which are not capable of a dust explosion, characterised in that at least one inert material component in the mixture is matched as regards its grain size distribution to the grain size distribution of the activated coke component so that in a static gas medium the settling velocity of the larger grain is greater than or equal to the settling velocity of the larger grain of the active coke component, and that the proportion by weight of carbon in the dust-like mixture can be up to 30 %.

2. A medium according to claim 1, characterised in that the slope of the grain size distribution curve of at least one inert material component which has a matched grain size is greater than or equal to the slope of the grain size distribution curve of the activated coke component.

3. A medium according to claim 1 or 2, characterised in that the inert material component which has a matched grain size is limestone flour.

4. A medium according to any one of claims 1 to 3, characterised in that a further inert material component, which does not have a matched grain size, contains reactive calcium compounds.

5. A medium according to claim 4, characterised in that the reactive calcium compound is calcium hydroxide.

6. The use of the medium according to any one of the preceding claims in flue gas purification installations having adsorption stages based on the entrained-flow principle, which are separately operated or which are connected upstream or downstream.

7. A use of the medium according to any one of claims 1 to 5, characterised in that it is used as a milk of lime suspension in spray sorption installations.

## Revendications

1. Agent pulvérulent d'épuration de gaz de combustion opérant selon le principe de l'adsorption sèche et composé d'un mélange de cokes actifs et de matières inertes ne pouvant exploser à l'état pulvérulent,
caractérisé en ce que
dans le mélange, au moins un composant en matière inerte est, en ce qui concerne sa distribution granulométrique, adapté à celle des composants en coke actif de manière que dans une atmosphère gazeuse calme, la vitesse de descente verticale des plus gros grains des composants inertes soit au moins égale à celle des plus gros grains du composant en coke actif et que le taux pondéral du carbone dans le mélange pulvérulent puisse aller jusqu'à 30 %.

2. Agent pulvérulent selon la revendication 1,
caractérisé en ce que
la pente de la courbe granulométrique d'au moins un composant inerte à granulométrie adaptée est au moins égale à la pente de la courbe granulométrique du composant en coke actif.

3. Agent pulvérulent selon la revendication 1 ou 2,
caractérisé en ce que
le composant inerte à granulométrie adaptée est de la pierre à chaux pulvérisée.

4. Agent pulvérulent selon l'une des revendications 1 à 3,
caractérisé en ce qu'
un autre composant inerte à granulométrie non adaptée contient des composés réactifs de calcium.

5. Agent pulvérulent selon la revendication 4,
caractérisé en ce que
le composé réactif est de l'hydroxyde de calcium.

6. Utilisation de l'agent pulvérulent selon une des revendications précédentes dans des installations d'épuration de fumées comportant des étages d'adsorption opérant séparément, ou montés en amont ou en aval et fonctionnant selon le principe du courant aérien.

7. Utilisation de l'agent pulvérulent selon l'une des revendications 1 à 5,
caractérisée en ce que
cet agent est mis en oeuvre à l'état de suspension de lait de chaux, dans des installations d'adsorption par pulvérisation.
